# EUROPÄISCHE PATENTSCHRIFT

(11) **EP 3 188 588 B1**
(45) Veröffentlichungstag und Bekanntmachung des Hinweises auf die Patenterteilung: **15.09.2021**
(21) Anmeldenummer: 15762767.0
(22) Anmeldetag: 24.08.2015
(51) Int. Cl.: A01G 9/02

(54) **HALTE- UND/ODER FÖRDERSYSTEM**
HOLDING AND/OR CONVEYING SYSTEM
SYSTÈME DE RETENUE ET/OU DE TRANSPORT

(30) Priorität: 03.09.2014 DE 202014104123 U
(43) Veröffentlichungstag der Anmeldung: 12.07.2017
(60) Teilanmeldung: 17166207.5
(73) Patentinhaber: B+M Textil GmbH & Co. KG, 09465 Sehmatal-Cranzahl (DE); Weisel, Niklas Andreas Wilm, 09456 Annaberg-Buchholz (DE)
(72) Erfinder: WEISEL, Niklas Andreas Wilm, 09456 Annaberg-Buchholz (DE); FÖRSTER, Philipp, 09456 Annaberg-Buchholz (DE)
(74) Vertreter: Steiniger, Carmen
(86) Internationale Anmeldenummer: PCT/IB2015/056386
(87) Internationale Veröffentlichungsnummer: WO 2016/034978

(56) Entgegenhaltungen:
- DE-A1- 3 804 356
- GB-A- 2 329 315
- GB-A- 2 486 886
- US-A- 614 002
- US-A1- 2013 167 436
- US-A1- 2013 219 788

## Beschreibung

Die vorliegende Erfindung betrifft ein Halte- und/oder Fördersystem mit wenigstens einer sich linien- oder streifenförmig erstreckenden Haltevorrichtung mit wenigstens einem einen Aufnahmebehälter oder ein Tragelement ausbildenden und an der Haltevorrichtung zu haltenden und/oder zu befördernden Objekt.

Es ist die Aufgabe der vorliegenden Erfindung, ein Halte- und/oder Fördersystem der oben genannten Gattung zur Verfügung zu stellen, das einfach und preiswert herstellbar ist, eine sichere Halterung von Objekten oder Stoffen und/oder einen sicheren Transport von Objekten oder Stoffen ermöglicht und in unterschiedlichen Bereichen flexibel anwendbar ist.

Diese Aufgabe wird einerseits durch ein Halte- und/oder Fördersystem mit wenigstens einer sich linien- oder streifenförmig erstreckenden Haltevorrichtung mit wenigstens einem einen Aufnahmebehälter oder ein Tragelement ausbildenden und an der Haltevorrichtung zu haltenden und/oder zu befördernden Objekt gelöst, wobei das Halte- und/oder Fördersystem wenigstens ein sich in einer Längsausrichtung der Haltevorrichtung erstreckendes Führungselement aufweist, an und/oder in dem das wenigstens eine Objekt vorgesehen ist, wobei das Führungselement ein Schlauch mit dehnbarem Durchmesser ist, der wenigstens eine Verdickungstelle aufweist, die einen Gegenhalt für das Objekt ausbildet, wobei das Führungselement ein Schlauch mit dehnbarem Durchmesser ist, und wobei entweder das Objekt wenigstens eine Durchgangsöffnung oder einen Kanal aufweist, durch die oder den das Führungselement hindurchgeführt ist, die Verdickungsstelle an der Durchgangsöffnung oder in dem Kanal angeordnet ist, die Verdickungsstelle durch wenigstens einen in dem Schlauch vorgesehenen Füllkörper und/oder eine Menge von in dem Schlauch vorgesehenen Füllmaterial ausgebildet ist, wobei das Schlauchmaterial an der Verdickungsstelle durch den Füllkörper und/oder das Füllmaterial derart gedehnt ist, dass der Außendurchmesser der Verdickungsstelle größer als der Innendurchmesser der Durchgangsöffnung ist, und sich der Durchmesser des Schlauchmaterials beidseitig der Verdickungsstelle verjüngt und dadurch den Füllkörper und/oder das Füllmaterial an der Verdickungsstelle hält, oder das Objekt selbst an der Verdickungsstelle in dem Schlauch vorgesehen ist und den Schlauch derart dehnt, dass sich der Durchmesser des Schlauchmaterials beidseitig der Verdickungsstelle verjüngt und dadurch das Objekt an der Verdickungsstelle hält.

Um das Halte-und/oder Fördersystem in der Waage zu halten, ist die Durchgangsöffnung vorzugsweise zentrisch in dem Objekt vorgesehen ist.

Besonders von Vorteil ist es, wenn das Objekt wenigstens einen Haltering, wenigstens ein Haltegitter und/oder wenigstens eine Halteplatte aufweist, in dem oder der die Durchgangsöffnung vorgesehen ist.

Der Haltering oder die Halteplatte können flüssigkeitsdurchlässig gestaltet sein, was beispielsweise dadurch erreichbar ist, dass in einem Bereich um die Durchgangsöffnung des Halteringes oder der Halteplatte wenigstens ein Durchlassloch vorgesehen ist.

In einer Variante der vorliegenden Erfindung ist der Haltering, die Halteplatte oder das Haltegitter innerhalb des Objektes oder als ein Deckel des Objektes vorgesehen, wobei das Objekt die Verdickungsstelle umschließt.

Vorzugsweise besitzt der Schlauch eine netzartige Struktur. Dies lässt sich beispielsweise textiltechnologisch dadurch umsetzen, dass der Schlauch gestrickt oder geflochten wird.

Das Objekt kann in vielfältiger Form und Ausgestaltung, wie beispielsweise in Form wenigstens eines Quaders, wenigstens eines Zylinders oder wenigstens eines Kegelstumpfs, ausgebildet sein.

In einem geeigneten Ausführungsbeispiel der vorliegenden Erfindung ist das Objekt in Form eines auf seine Kegelstumpfspitze gestellten Kegelstumpfs ausgebildet, wobei in der Kegelstumpfspitze des Kegelstumpfs eine Durchgangsöffnung vorgesehen ist, durch die der Schlauch geführt ist, wobei in dem Kegelstumpf wenigstens ein mit der Kegelstumpfinnenwand oder dem Kegelstumpfbodenrand verbundener Haltering oder ein Haltegitter vorgesehen ist, durch den oder das der Schlauch geführt ist, und wobei die Verdickungsstelle zwischen dem Haltering und der Kegelstumpfspitze vorgesehen ist.

In einer besonders bevorzugten Ausgestaltung der Erfindung sind an dem Halte- und/oder Fördersystem wenigstens zwei Objekte aufeinanderfolgend an dem Führungselement aufgereiht, wobei wenigstens zwei dieser Objekte ineinander gesteckt oder ineinander steckbar sind.

Dies kann gemäß einer Ausbildung der vorliegenden Erfindung beispielsweise dadurch umgesetzt werden, dass in einem an dem Führungselement vorgesehenen Objekt in Form eines Kegelstumpfs wenigstens ein mit der Kegelstumpfinnenwand oder dem Kegelstumpfbodenrand verbundener Haltering oder ein mit der Kegelstumpfinnenwand oder dem Kegelstumpfbodenrand verbundenes Haltegitter vorgesehen ist, der oder das eine Durchgangsöffnung aufweist, durch die der Schlauch hindurchgeführt ist und in die eine Kegelstumpfspitze eines weiteren Kegelstumpfs, durch die auch der Schlauch hindurchgeführt ist, eingesteckt ist.

In einer besonders einfach herstellbaren Ausführungsform der vorliegenden Erfindung ist der Füllkörper wenigstens ein Stein oder ein Ball, dessen Außendurchmesser größer als der ungedehnte Innendurchmesser des Schlauches ist.

Das erfindungsgemäße Halte- und/oder Fördersystem kann in verschiedenen Anwendungsformen auch beispielsweise zum Einstecken und Halten von Gegenständen oder Pflanzen verwendet oder befüllt werden. Bei diesen Anwendungen wird als Objekt ein Rohrstutzen mit wenigstens einem seitlich vorgesehenen Flanschanschluss, in den beispielsweise eine Blume hineingesteckt werden kann, verwendet, wobei der Rohrstutzen in dem Schlauch vorgesehen ist und darin eine Verdickungsstelle ausbildet und der Flanschanschluss durch den Schlauch nach außen ragt. Durch den nach außen ragenden Flanschanschluss wird ein zusätzlicher Halt für den Rohrstutzen innerhalb des Schlauches geschaffen.

Diese Ausführungsform der Erfindung ist besonders flexibel anwendbar, wenn der Flanschanschluss in oder auf den Rohrstutzen gesteckt oder geschraubt ist.

In einer günstigen Weiterbildung der vorliegenden Erfindung sind wenigstens zwei Führungselemente vorgesehen, die auf gleicher Höhe angeordnete Verdickungsstellen aufweisen, die eine Verbindungsbrücke halten, die sich zwischen den Führungselementen erstreckt und die Verdickungsstellen umschließt.

Das erfindungsgemäße Halte- und/oder Fördersystem eignet sich besonders gut zur Aufbewahrung von Pflanzen, wenn das wenigstens eine Führungselement so ausgestaltet ist, dass es als eine Fluidleitung nutzbar ist. Durch diese Fluidleitung können beispielsweise Pflanzen, die in Objekten in Form von Pflanzgefäßen oder Vasen an dem Führungselement gehalten werden, mit Wasser versorgt werden.

Bei dieser Ausführungsform der Erfindung ist es besonders günstig, wenn das überschüssige Wasser, mit dem die Pflanzen über die Fluidleitung versorgt werden, unten aufgefangen werden kann. Aus diesem Grund ist bei einer Variante dieser Ausführungsform wenigstens eines der Objekte ein Fluidauffangbehälter.

Um das in dem Fluidauffangbehälter aufgefangene Wasser geeignet ableiten zu können, ist es in einer weiteren Option dieser Ausführungsform vorgesehen; dass parallel zu dem wenigstens einen Führungselement wenigstens eine Fluidleitelement bis in den Fluidauffangbehälter verläuft. Das Fluidleitelement kann beispielsweise wenigstens einen Schlauch und/oder wenigstens eine Hohlfaser aufweisen, mit der eine dezentralisierte Wasserrückführung aus dem Fluidauffangbehälter nach oben ermöglicht werden kann. Besonders praktisch ist es, wenn das Fluidleitelement an dem Führungselement, beispielsweise mit wenigstens einer Klammer, gehalten wird.

Bevorzugte Ausführungsformen der vorliegenden Erfindung, deren Aufbau, Funktion und Vorteile werden im Folgenden anhand von Figuren näher erläutert, wobei
- Figur 1: schematisch eine Ausführungsform einer Haltevorrichtung eines erfindungsgemäßen Halte- und/oder Fördersystems mit mehreren Objekten, wie teilweise ineinander stapelbaren Kegelstumpfförmigen Gefäßen und einem Quader zur Unterbringung verschiedener Gegenstände, in einer perspektivischen Darstellung zeigt;
- Figur 2: schematisch einen Ausschnitt einer weiteren Ausführungsform einer Haltevorrichtung eines erfindungsgemäßen Halte- und/oder Fördersystems in einer perspektivischen Darstellung zeigt, in welche ein Rohrstutzen zur Schlauchverdickung eingebracht ist;
- Figur 3: schematisch eine nächste Ausführungsform einer Haltevorrichtung eines erfindungsgemäßen Halte- und/oder Fördersystems in einer Draufsicht zeigt, bei welcher zwei Führungselemente mit daran vorgesehenen Verdickungsstellen zum Einsatz kommen, zwischen welchen eine Verbindungsbrücke gehalten wird;
- Figur 4: schematisch eine noch eine weitere Ausführungsform einer Haltevorrichtung eines erfindungsgemäßen Halte- und/oder Fördersystems in einer perspektivischen Darstellung zeigt, bei der das Führungselement als Fluidleitung ausgebildet ist;
- Figur 5: schematisch ein Detail einer möglichen Ausführungsform einer Haltevorrichtung eines erfindungsgemäßen Halte- und/oder Fördersystems in einer perspektivischen Darstellung zeigt, bei der das an dem Führungselement gehaltene Objekt ein Kegelstumpf mit einem inneren Haltering ist;
- Figur 6: schematisch ein Detail der Haltevorrichtung aus Figur 1 in einer perspektivischen Darstellung zeigt, bei der zwei Kegelstumpfförmige Objekte ineinander gesteckt sind;
- Figur 7: schematisch einen Ausschnitt einer anderen Ausführungsform einer Haltevorrichtung eines erfindungsgemäßen Halte- und Fördersystems in einer perspektivischen Darstellung zeigt, die aus zwei, unter Ausbildung von Taschen verbundenen Bändern ausgebildet ist, wobei sich das zweite Band längs des ersten Bandes erstreckt;
- Figur 8: schematisch einen Ausschnitt einer weiteren Ausführungsform einer Haltevorrichtung eines erfindungsgemäßen Halte- und Fördersystems in einer perspektivischen Darstellung zeigt, die aus zwei, unter Ausbildung von Taschen verbundenen Bändern ausgebildet ist, wobei mehrere zweite Bänder quer zu dem ersten Band vorgesehen sind;
- Figur 9: schematisch eine Ausbildung eines erfindungsgemäßen Halte- und Fördersystems in einer perspektivischen Darstellung zeigt, bei dem eine Anzahl streifenförmiger Haltevorrichtungen an einer Aufhängeinrichtung aufgehängt sind; und
- Figur 10: schematisch eine andere Ausbildung eines erfindungsgemäßen Halte- und Fördersystems in einer perspektivischen Darstellung zeigt, in der das Halte- und/oder Fördersystem mit einem Mitnehmer und einer Abstreifeinrichtung versehen ist und zur Reinigung einer Flüssigkeit einsetzbar ist.

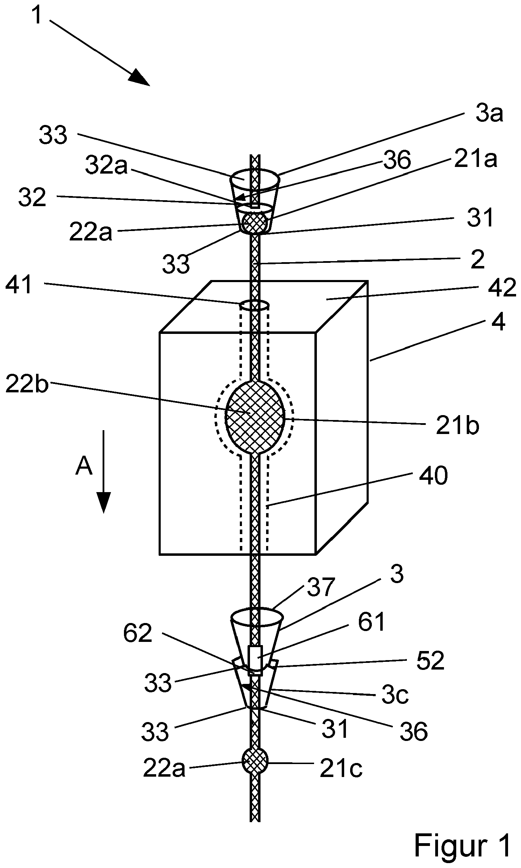

Figur 1 zeigt schematisch eine Ausführungsform einer Haltevorrichtung 1 eines erfindungsgemäßen Halte- und/oder Fördersystems in einer perspektivischen Darstellung. Die Haltevorrichtung 1 weist ein sich der Längsausrichtung A der Haltevorrichtung 1 erstreckendes Führungselement 2 auf. Das Führungselement 2 ist ein Schlauch mit dehnbarem Durchmesser. Der Schlauch weist eine netzartige Struktur auf und ist in der dargestellten Ausführungsform geflochten. In anderen, nicht dargestellten Ausbildungen der vorliegenden Erfindung kann der Schlauch beispielsweise auch gestrickt sein.

Das als Schlauch ausgebildete Führungselement 2 weist in der Ausführungsform von Figur 1 an mehreren Stellen Verdickungsstellen 21a, 21b, 21c auf. Diese Verdickungsstellen 21a, 21b, 21c sind jeweils dadurch in dem Führungselement 2 ausgebildet, dass in dem Inneren des Schlauches an der Verdickungsstelle 21a, 21b, 21c wenigstens ein Füllkörper 22b und/oder eine Menge von Füllmaterial 22a vorgesehen ist, durch den oder das das Schlauchmaterial an der Verdickungsstelle 21a, 21b, 21c gedehnt ist. Ober- und unterhalb der Verdickungsstellen 21a, 21b, 21c weist der Schlauch seinen ungedehnten Durchmesser auf, zieht sich also nach dem Umschließen des Füllkörpers 22b oder Füllmaterials 22a wieder zusammen und hält damit den Füllkörper 22b oder das Füllmaterial 22a in seiner Position in dem Schlauch.

An dem Führungselement 2 sind mehrere Objekte vorgesehen. So befindet sich oberhalb der Verdickungsstelle 21c ein Objekt in Form eines Kegelstumpfs 3c. Der Kegelstumpf 3c ist mit seiner eine Durchgangsöffnung 31 für das Führungselement 2 aufweisenden Kegelstumpfspitze 31c nach unten ausgerichtet, wobei die Kegelstumpfspitze 33 auf der Verdickungsstelle 21c aufsitzt. Dies ist dadurch möglich, weil der Außendurchmesser der Verdickungsstelle 21c größer als der Innendurchmesser der Durchgangsöffnung 31 ist. Der Kegelstumpf 3c ist nach oben offen, also trichterartig ausgebildet.

Innerhalb des Kegelstumpf 3c ist ein Haltegitter 52 vorgesehen, das an der Kegelstumpfinnenwand 36 des Kegelstumpfs 3c befestigt ist. In anderen, nicht gezeigten Ausführungsformen der Erfindung kann das Haltegitter 52 auch an einem Kegelstumpfbodenrand 37 befestigt sein. In das Haltegitter 52 ist von oben ein weiterer, mit seiner Kegelstumpfspitze 33 ausgerichteter Kegelstumpf 3 eingesetzt. In der Kegelstumpfspitze 33 des Kegelstumpfs 3 ist wiederum eine Durchgangsöffnung 31 vorgesehen, durch die das Führungselement 2 hindurchgeführt ist.

Im Inneren der Kegelstumpfspitze 33 des Kegelstumpfs 3 ist um das Führungselement 2 eine Haltehülse 61 vorgesehen, die ein auf die Haltehülse 61 steckbares oder mit dieser verschraubbares Hülsengegenstück 62 aufweist. Die Haltehülse 62 ist in der Ausführungsform von Figur 1 oberhalb des Haltegitters 52 und das Hülsengegenstück unterhalb des Haltegitters 52 vorgesehen, wobei Haltehülse 61 und Hülsengegenstück 62 miteinander lösbar verbunden sind. Dadurch kann der Kegelstumpf 3 stabil in seiner Position auf dem Kegelstumpf 3c gehalten werden, ohne dass der Kegelstumpf 3 vollständig in den Kegelstumpf 3c hineinrutscht. Ein Teil der offenen Oberfläche des unteren Kegelstumpfs 3c bleibt demnach offen. Auch der Kegelstumpf 3 ist oben offen.

Beide Kegelstumpf 3c, 3 werden durch die Verdickungsstelle 21c an dem Führungselement 2 übereinander gehalten, und der Kegelstumpf 3c stützt den Kegelstumpf 3.

Weiter oben ist an dem Führungselement 2 ein weiteres Objekt in Form eines Quaders 4 vorgesehen. Der Innenraum des hier innen hohl ausgebildeten Quaders 4 kann beispielsweise zur Aufbewahrung verschiedener Dinge genutzt werden. Der Quader 4 weist einen durch ihn hindurch führenden Durchgangskanal 40 auf, durch den das Führungselement 2 geführt ist. Der Durchgangskanal 40 beginnt an einem als Halteplatte 42 dienenden Deckel des Quaders 4 mit einem Durchgangsloch 41, dessen Durchmesser so groß ist, dass das Führungselement 2 in den Quader 4 hineingeführt werden kann. Das Führungselement 2 weist innerhalb des Durchgangkanals 40 eine Verdickungsstelle 21b auf, in der ein Füllkörper 22b, wie beispielsweise ein Stein vorgesehen ist. Der Außendurchmesser der Verdickungsstelle 21b ist größer als der Durchmesser der Durchgangsöffnung 41, sodass die Verdickungsstelle 21b einen Gegenhalt für den Deckel 42 des Quaders 4 ausbildet und damit der Quader durch die darin vorgesehene Verdickungsstelle 21b des Führungselementes 2 an dem Führungselement 2 gehalten wird.

Oberhalb des Quaders 4 ist an dem Führungselement 2 von Figur 1 ein weiterer mit seiner Kegelstumpfspitze 33 nach unten ausgerichteter Kegelstumpf 3a gehalten. In der Kegelstumpfspitze ist wiederum eine Durchgangsöffnung 31 für den Durchgang des Führungselementes 2 vorgesehen. In dem Kegelstumpf 3a ist ein mit der Kegelstumpfinnenwand 36 verbundener Haltering 32 vorgesehen, der eine Durchgangsöffnung 32a besitzt, durch die ebenfalls das Führungselement 2 hindurchgeführt ist. Zwischen dem Haltering 32 und der in der Kegelstumpfspitze 33 vorgesehenen Durchgangsöffnung 31 weist das Führungselement 2 eine Verdickungsstelle 21a auf. Die Verdickungsstelle 21a ist in dem gezeigten Ausführungsbeispiel mit einer Menge an Füllmaterial 22a befüllt, durch das der Schlauch an der Verdickungsstelle 21a derart gedehnt ist, dass sein Außendurchmesser größer als die Durchgangsöffnung 32a in dem Haltering 32 und als die Durchgangsöffnung 31 in der Kegelstumpfspitze 33 des Kegelstumpfs 3a ist. Dadurch wird die Verdickungsstelle 21a zwischen den beiden Durchgangsöffnungen 32a und 31 gehalten, womit der Kegelstumpf 3a an seinem Platz an dem Führungselement 2 gehalten wird.

Das Halte- und/oder Fördersystem aus Figur 1 fasst somit viele mögliche Ausbildungsformen in einer Darstellung zusammen. Bei allen in Figur 1 gezeigten Ausbildungen kommt jeweils eine in der Schlauchkordel integrierte, in Form der Verdickungsstellen 21a, 21b, 21c vorgesehene Fixierung zum Einsatz. An der jeweiligen Verdickungsstelle 21a, 21b, 21c können Gegenstände, die die Kordel, also den Schlauch, umschließen, aufgestellt oder geometrisch passend umschlossen werden. Bei dem gezeigten Ausführungsbeispiel ist bei jedem an dem Schlauch vorgesehenen Objekt noch Raum für ablaufende Flüssigkeit vorhanden.

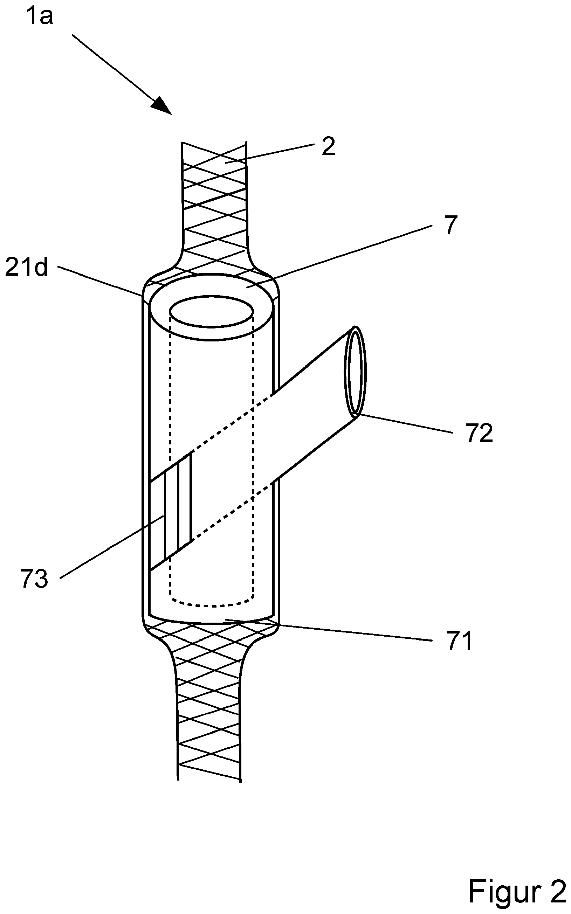

Figur 2 zeigt schematisch einen Ausschnitt einer weiteren Ausführungsform einer Haltevorrichtung 1a eines erfindungsgemäßen Halte- und/oder Fördersystems in einer perspektivischen Darstellung.

Die Haltevorrichtung 1a weist ein Führungselement 2 in Form eines dehnbaren Schlauches auf. Der Schlauch kann wie in der Ausführungsform von Figur 1 beschrieben ausgebildet sein.

Bei der Haltevorrichtung 1a weist das Führungselement 2 eine Verdickungsstelle 21d auf, die durch Einbringen eines Rohrstutzens 7 in den Schlauch ausgebildet ist. Der Rohrstutzen 7 dehnt den Schlauch an der Verdickungsstelle 21d. Ober- und unterhalb der Verdickungsstelle 21d weist der Schlauch seinen ungedehnten Durchmesser auf, zieht sich also nach dem Umschließen des Rohrstutzens 7 wieder zusammen und hält damit den Rohrstutzen 7 in seiner Position in dem Schlauch.

Seitlich an dem Rohrstutzen 7 ist ein Flanschanschluss 72 vorgesehen. In den Flanschanschluss 7 kann in einer Anwendungsvariante der Erfindung beispielsweise eine Pflanze gesteckt werden. Diese Ausführungsform der Erfindung kann dazu genutzt werden, um nachträglich etwas in den Schlauch einzubringen und/oder eine Fixierung an der Stelle des Rohrstutzens 7 anzubringen.

In der gezeigten Ausführungsform ist der Flanschanschluss 72 auf den Rohrstutzen 7 mit einem Gewinde 73 geschraubt. In anderen, nicht gezeigten Ausführungsbeispielen der Erfindung kann der Flanschanschluss 72 auch auf den Rohrstutzen 7 aufgesteckt werden. Der Flanschanschluss 72 ist seitlich durch eine Öffnung in dem Führungselement 2 geführt und hält damit den Rohrstutzen 7 zusätzlich an der gezeigten Stelle in dem Schlauch.

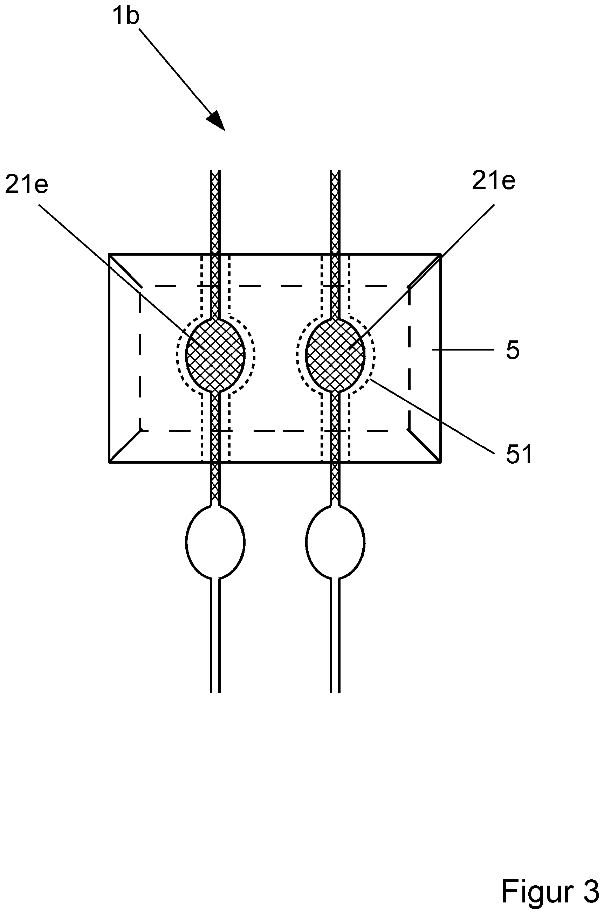

Figur 3 zeigt schematisch eine nächste Ausführungsform einer Haltevorrichtung 1b eines erfindungsgemäßen Halte- und/oder Fördersystems in einer Draufsicht.

In der Ausführungsform von Figur 3 kommen zwei Führungselemente 2 mit darin vorgesehenen Verdickungsstellen 21e, die wie oben beschrieben ausgebildet sein können, zum Einsatz. Die beiden Führungselemente 2 sind durch zwei zueinander parallel vorgesehene Durchgangskanäle 51 in einer Tragplatte 5 geführt, wodurch die Tragplatte 5 mittels der beiden Führungselemente 2 gehalten wird. Die Tragplatte 5 bildet eine Brücke zwischen den beiden Führungselementen 2 aus, die es ermöglicht, die Haltevorrichtung 1b als horizontales Fördersystem zu nutzen, indem beispielsweise Gegenstände auf die Tragplatte 5 gelegt und nachfolgend durch ein die Haltevorrichtung 1b umfassendes Halte- und/oder Fördersystem transportiert werden. Die Verdickungsstellen 21e befinden sich dabei im Inneren der Verbindungsbrücke.

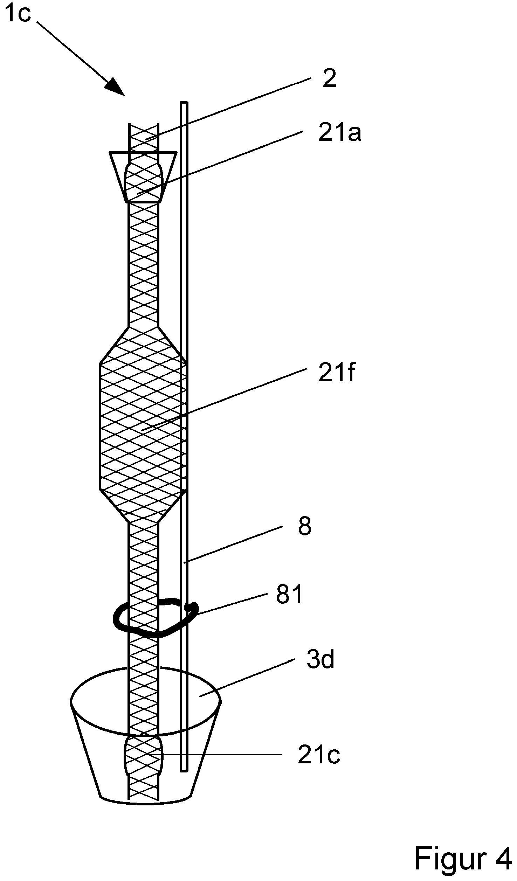

Figur 4 zeigt schematisch noch eine weitere Ausführungsform einer Haltevorrichtung 1c eines erfindungsgemäßen Halte- und/oder Fördersystems in einer perspektivischen Darstellung.

Die Haltevorrichtung 1c weist ein Führungselement 2 in Form eines dehnbaren Schlauches, der wie oben beschrieben ausgebildet sein kann, auf. Ähnlich wie in der Ausführungsform von Figur 1 ist an einem unteren Ende des Führungselementes 2 ein Objekt in Form eines mit seiner Kegelstumpfspitze 33 nach unten ausgerichteten Kegelstumpfs 3d unter Nutzung einer Verdickungsstelle 21a des Führungselementes 2, die einen Gegenhalt zu einem in dem Kegelstumpf 3 vorgesehenen Haltering 32 bildet, gehalten. Im Unterschied zu dem Kegelstumpf 3 aus Figur 1 ist der Kegelstumpf 3d an seiner Kegelstumpfspitze 33 geschlossen, bildet also ein Auffanggefäß, zum Beispiel für durch das Führungselement 2 nach unten geleitetes Wasser, aus.

Ferner weist das Führungselement noch weitere Verdickungsstellen, wie beispielsweise die Verdickungsstelle 21g, die zur Wasserspeicherung dienen kann, auf. Dies ist beispielsweise dann günstig, wenn das Führungselement 2 gemäß einer Ausführungsform der vorliegenden Erfindung als Fluidleitung genutzt wird.

Parallel zu dem Führungselement 2 ist dezentral an der Haltevorrichtung 1c ein Fluidleitelement 8 vorgesehen. Das Fluidleitelement 8 kann beispielsweise wenigstens ein Rohr, ein Halm, eine Hohlfaser oder ein Schlauch sein. Das Fluidleitelement 8 kann beispielsweise, wie in Figur 4 gezeigt, mit Hilfe von Klemmen 81 an dem Führungselement 2 befestigt sein. In dem Beispiel von Figur 4 führt das Fluidleitelement 8 in den als Auffangbehälter dienenden Kegelstumpf 3d. Somit kann mit Hilfe des Fluidleitelementes 8 in dem Kegelstumpf 3d aufgefangene Flüssigkeit durch Unterdruck nach oben gefördert werden, wobei die Flüssigkeitszuführung zentral über das Führungselement 2 und die Flüssigkeitsableitung dezentralisiert über das Fluidleitelement 8 vorgenommen werden kann. Dadurch kann man die gezeigte Haltevorrichtung 1c überall aufhängen und ist nicht an ein fixes Auffangbecken gebunden.

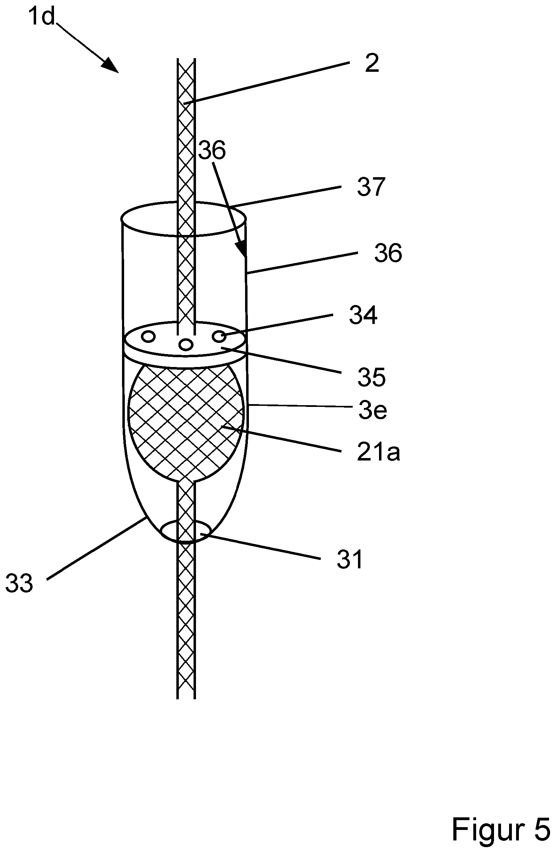

Figur 5 zeigt schematisch ein Detail einer weiteren möglichen Ausführungsform einer Haltevorrichtung 1d eines erfindungsgemäßen Halte- und/oder Fördersystems in einer perspektivischen Darstellung.

Bei der Haltevorrichtung 1d ist an dem wie oben beschrieben ausbildbaren Führungselement 2 ein Objekt in Form eines mit seiner Kegelstumpfspitze 33 nach unten ausgerichteten Kegelstumpfs 3e vorgesehen. Im Innenraum des Kegelstumpfs 3e ist ein Haltering 35 mit einer Durchgangsöffnung 31 für das Führungselement 2 und Durchtrittslöchern 34 für Flüssigkeit vorgesehen. Die Durchtrittslöcher 34 bilden einen Siebboden aus, mit dem beispielsweise verschiedene lockere Schüttungen gehalten werden können.

Die Verdickungsstelle 21a des Führungselementes 2 ist zwischen der Kegelstumpfspitze 33 und dem Haltering 35 vorgesehen. Somit kann in den unteren Bereich des Kegelstumpfs 3e laufende und sich darin sammelnde Flüssigkeit wieder an den Schlauch bzw. das Führungselement 2 zurückgeführt werden.

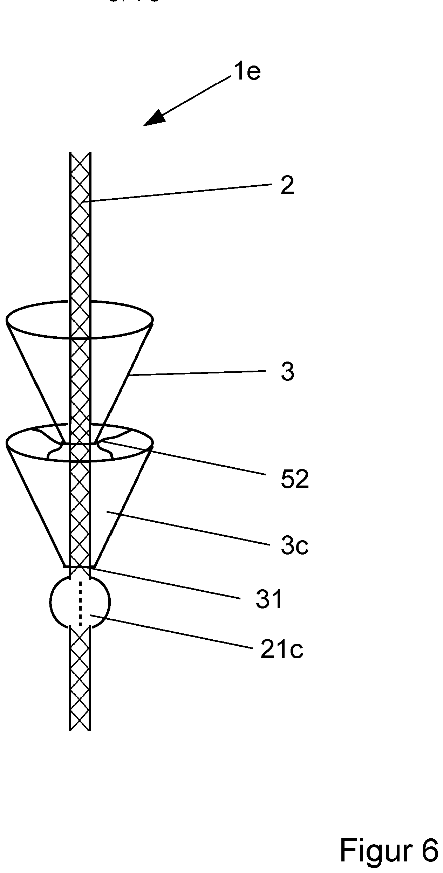

Figur 6 zeigt schematisch ein bereits oben beschriebenes Detail 1e der Haltevorrichtung 1 aus Figur 1 in einer perspektivischen Darstellung, wobei zwei kegelstumpfförmige Objekte 3 und 3c ineinander stapelbar an dem Führungselement 2 gehalten sind. Die Fixierung der Objekte 3, 3c erfolgt außenliegend durch die Verdickungsstelle 21c, auf welcher die verschiedenen Objekte 3, 3c, die hier nur beispielhaft gezeigt sind, aufgesetzt werden können. Die Verdickungsstelle 21c kann vorteilhaft nach einem Aufreihen der Objekte 3, 3c an dem Führungselement angebracht werden. Die umgekehrten Kegelstümpfe 3, 3c können als Becher oder Gefäße genutzt werden und ineinander geschoben bzw. gesteckt werden. Dabei erlaubt das Stecksystem ein großes Befüllvolumen.

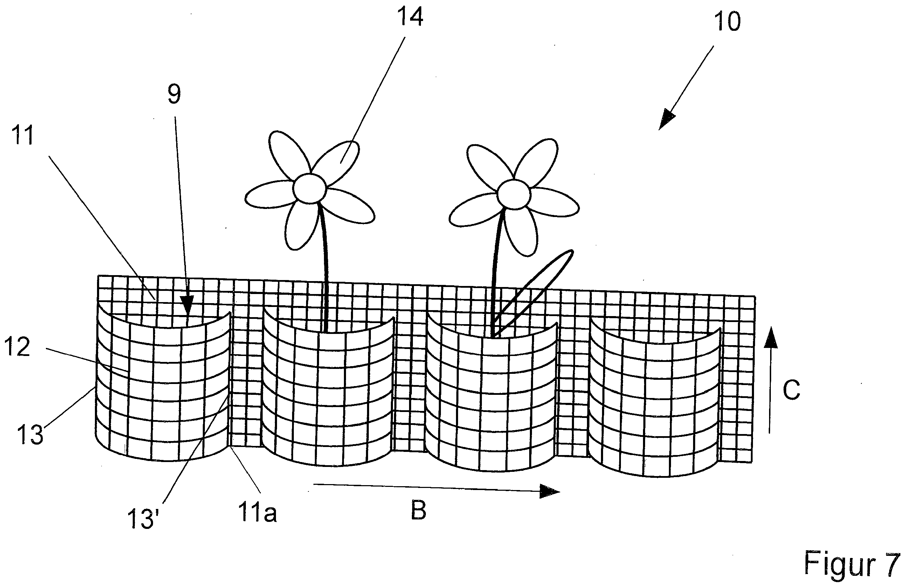

Figur 7 zeigt schematisch einen Ausschnitt einer anderen Ausführungsform einer Haltevorrichtung 10 eines erfindungsgemäßen Halte- und Fördersystems in einer perspektivischen Darstellung.

Die Haltevorrichtung 10 weist ein einen Aufnahmebehälter oder ein Tragelement ausbildende Objekt auf, wobei das Objekt aus zwei Bändern 11, 12 ausgebildet ist. In der Ausführungsform von Figur 7 erstreckt sich ein zweites Band 12 längs eines ersten Bandes 11, wobei die Bänder 11, 12 an einer Längsseite 11a sowie an voneinander in Längsrichtung B der Bänder 11, 12 beabstandeten Stellen unter Ausbildung von einseitig offenen Taschen 9 miteinander verbunden sind. In die Taschen 9 können beispielsweise, wie in Figur 7 gezeigt, Pflanzen 14 eingebracht werden.

Die Haltevorrichtung 10 ist also ein textiles Breitband mit Taschen 9. Das Breitband kann horizontal und vertikal installiert werden. Eine Befüllung der Taschen 9 kann jedoch nur von einer Seite erfolgen. Dabei können die Taschen 9 entweder oben oder unten oder seitlich geöffnet sein. Die Haltevorrichtung 10 kann als sehr weiches und flexibles System zur Verfügung gestellt werden, das einen aufrechten horizontalen Transport oder eine horizontale Aufhängung erlaubt.

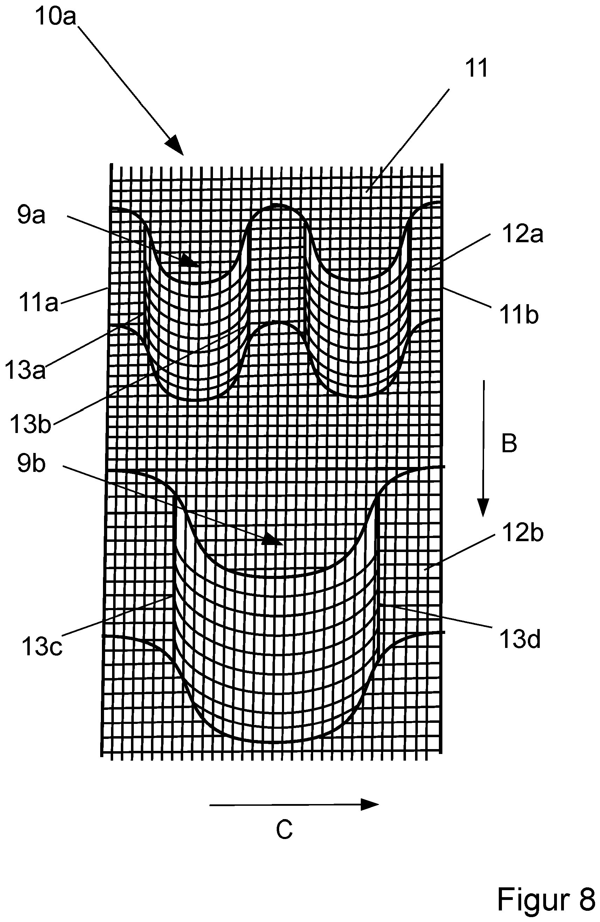

Figur 8 zeigt schematisch einen Ausschnitt einer weiteren Ausführungsform einer Haltevorrichtung 10a eines erfindungsgemäßen Halte- und Fördersystems in einer perspektivischen Darstellung.

Im Unterschied zu der Haltevorrichtung 10 aus Figur 7 ist bei der Haltevorrichtung 10a das einen Aufnahmebehälter oder ein Tragelement ausbildende Objekt aus einem sich in einer Längsrichtung B erstreckenden Band 11 und sich in Querrichtung C zu dem Band 11 erstreckenden Bändern 12a, 12b ausgebildet. Dabei sind die jeweils die Enden der sich quer erstreckenden Bänder 12a, 12b mit jeweils einer Längsseite 11a, 11b des Bandes 11, beispielsweise durch Nähen oder Weben, verbunden. Ferner sind die querliegenden Bänder 12a, 12b unter Ausbildung wenigstens einer einseitig offenen Tasche 9a, 9b in Längsrichtung B des Bandes 11 mit diesem verbunden.

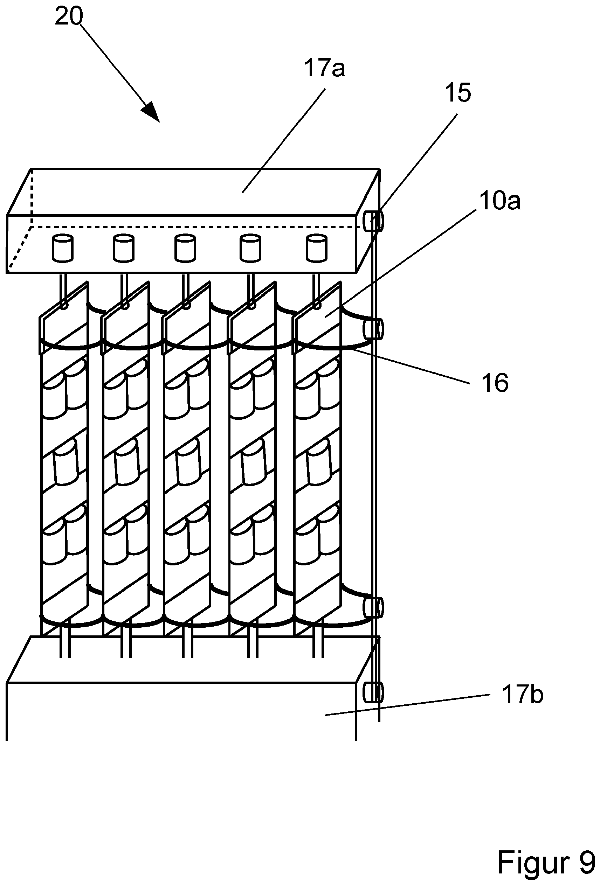

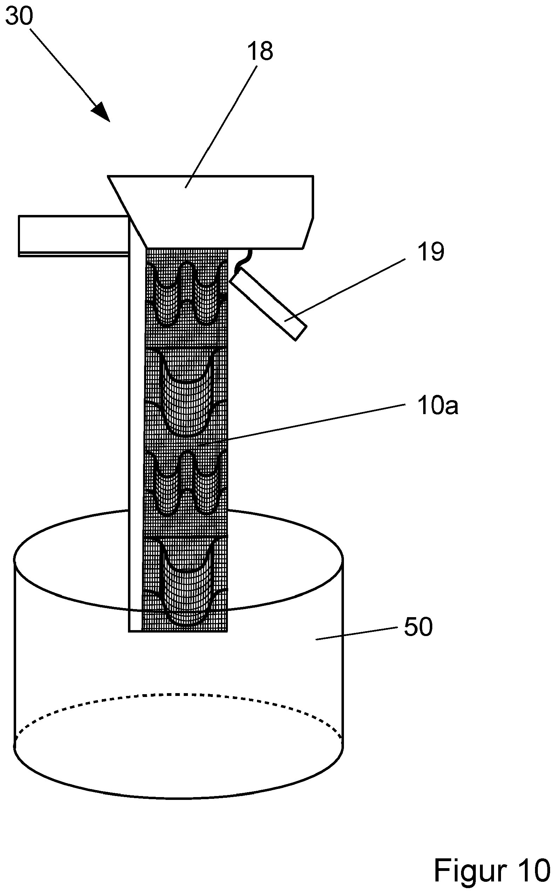

Die Haltevorrichtung 10a bildet demnach auch ein textiles Breitband mit Taschen 9a, 9b aus. Dabei können ein oder mehrere solcher Breitbänder beispielsweise in der Vorrichtung von Figur 9 und/oder von Figur 10 verwendet werden. Die Breitbänder lassen sich zudem so installieren, dass man eine ideale Ausrichtung zu einem Luft- und/oder Gasstrom und/oder zu einer Lichteinstrahlung erreicht.

Figur 9 zeigt schematisch eine Ausbildung eines erfindungsgemäßen Halte- und Fördersystems 20 in einer perspektivischen Darstellung.

Das Halte- und Fördersystem 20 weist eine Anzahl streifenförmiger Haltevorrichtungen 10a auf, die an einer Aufhängeeinrichtung 17a, 17b aufgehängt sind. Anstelle der Haltevorrichtungen 10a und/oder in Ergänzung zu den Haltevorrichtungen 10a können in anderen, nicht gezeigten Ausführungsformen der vorliegenden Erfindung auch andere Haltevorrichtungen wie die Haltevorrichtungen 1, 1a, 1b, 1c, 1d, 1e, 10 aus anderen Ausführungsformen der vorliegenden Erfindung angewendet werden.

Wie es in Figur 9 gezeigt ist, sind die Haltevorrichtungen 10a jalousienartig drehbar aufgehängt, sodass ihre horizontale Winkelausrichtung durch eine die Haltevorrichtungen 10a koppelnde Koppel- und Drehvorrichtung 16 veränderbar ist. Ferner ist in der Ausführungsform von Figur 9 die obere Aufhängeeinrichtung 1a mit einem Kanalsystem 15 mit einem Fluidzulauf und einem Fluidablauf gekoppelt, sodass die Haltevorrichtungen bzw. deren Inhalte von oben z. B. mit Wasser versorgt werden können.

Figur 10 zeigt schematisch eine andere Ausbildung eines erfindungsgemäßen Halte- und Fördersystems 30 in einer perspektivischen Darstellung.

Das Halte- und/oder Fördersystem 30 weist einen Mitnehmer 18 auf, mit dem wenigstens eine erfindungsgemäße Haltevorrichtung 10a in ein Flüssigkeitsreservoir 50 führbar ist. In anderen, nicht gezeigten Ausführungsformen der vorliegenden Erfindung können anstelle und/oder in Ergänzung zu der Haltevorrichtung 10a bei dem Halte- und/oder Fördersystem 30 auch andere erfindungsgemäße Haltevorrichtungen, wie die Haltevorrichtungen 1, 1a, 1b, 1c, 1d, 1e, 10, zum Einsatz kommen. Mit Hilfe der Haltevorrichtung 10a können beispielsweise in dem Flüssigkeitsreservoir vorliegende Verunreinigungen aufgenommen werden, daraufhin mit einer Abstreifeinrichtung 19 des Halte- und/oder Fördersystems 30 abgestreift und nachfolgend entsorgt werden. Das Halte- und/oder Fördersystem 30 eignet sich somit sehr gut sowohl zur Reinigung von fließenden Gewässern als auch von stehenden Flüssigkeiten.

Das Halte- und/oder Fördersystem 30 kann insbesondere als Bandskimmer verwendet werden, mit dem aus Schüttungen und zum Beispiel schwammartigen Strukturen, welche sich in den Taschen 9, 9a, 9b der Haltevorrichtung(en) 10, 10a befinden, Flüssigkeiten herausgedrückt und transportiert werden. Das Flüssigkeitsreservoir 50, aus dem Flüssigkeiten mit dem Bandskimmer entnommen werden, kann beispielsweise ein Flüssigkeitsbecken mit einer zu oxidierenden Substanz sein.

Mit der vorliegenden Erfindung wird ein in vielfältiger Weise ausbildbares Halte- und/oder Fördersystem auf textiler Basis zur Verfügung gestellt, das unter anderem zum Transport und zur Befestigung als auch zur Trocknung von Feststoffen und Schüttungen sowie zur Reaktion von feuchten Feststoffen und Schüttungen mit Gasen genutzt werden kann.

## Patentansprüche

1. Halte- und/oder Fördersystem mit wenigstens einer sich linien- oder streifenfömig erstreckenden Haltevorrichtung (1, 1a, 1b, 1c, 1d, 1e, 10, 10a) mit wenigstens einem einen Aufnahmebehälter oder ein Tragelement ausbildenden und an der Haltevorrichtung (1, 1a, 1b, 1c, 1d, 1e, 10, 10a) zu haltenden und/oder zu befördernden Objekt (3, 3a, 3b, 3c, 4, 5, 7),
**dadurch gekennzeichnet,**
**dass** das Halte- und/oder Fördersystem wenigstens ein sich in der Längsausrichtung (A) der Haltevorrichtung (1, 1a, 1b, 1c, 1d, 1e, 10, 10a) erstreckendes Führungselement (2) aufweist, an und/oder in dem das wenigstens eine Objekt (3, 3a, 3b, 3c, 4, 5, 7) vorgesehen ist, wobei das Führungselement (2) ein Schlauch mit dehnbarem Durchmesser ist, der wenigstens eine Verdickungstelle (21a, 21b, 21c, 21d, 21e, 21f) aufweist, die einen Gegenhalt für das Objekt (3, 3a, 3b, 3c, 4, 5) ausbildet, wobei entweder
das Objekt (3, 3a, 3b, 3c, 4, 5) wenigstens eine Durchgangsöffnung (31, 41) oder einen Kanal (51) aufweist, durch die oder den das Führungselement (2) hindurchgeführt ist, die Verdickungsstelle (21a, 21b, 21c, 21e, 21f) an der Durchgangsöffnung (31, 32a, 41) oder in dem Kanal (51) angeordnet ist, die Verdickungsstelle (21a, 21b, 21c, 21e, 21f) durch wenigstens einen in dem Schlauch vorgesehenen Füllkörper (22b) und/oder eine Menge von in dem Schlauch vorgesehenen Füllmaterial (22a) ausgebildet ist, wobei das Schlauchmaterial an der Verdickungsstelle (21a, 21b, 21c, 21d, 21e, 21f) durch den Füllkörper (22b) und/oder das Füllmaterial (22a) derart gedehnt ist, dass der Außendurchmesser der Verdickungsstelle (21a, 21b, 21c, 21e, 21f) größer als der Innendurchmesser der Durchgangsöffnung (31, 32a, 41, 51, 61) ist, und sich der Durchmesser des Schlauchmaterials beidseitig der Verdickungsstelle (21a, 21b, 21c, 21e, 21f) verjüngt und dadurch den Füllkörper (22b) und/oder das Füllmaterial (22a) an der Verdickungsstelle (21a, 21b, 21c, 21e, 21f) hält, oder
das Objekt (7) selbst an der Verdickungsstelle (21d) in dem Schlauch vorgesehen ist und den Schlauch derart dehnt, dass sich der Durchmesser des Schlauchmaterials beidseitig der Verdickungsstelle (21d) verjüngt und dadurch das Objekt (7) an der Verdickungsstelle (21d) hält.

2. Halte- und/oder Fördersystem nach Anspruch 1, **dadurch gekennzeichnet, dass** die Durchgangsöffnung (31, 41) oder der Kanal (51) zentrisch in dem Objekt (3, 3a, 3b, 3c, 4, 5) vorgesehen ist.

3. Halte- und/oder Fördersystem nach Anspruch 1 oder 2, **dadurch gekennzeichnet, dass** das Objekt (3a, 3b, 3c, 4, 5) wenigstens einen Haltering (32, 35), wenigstens ein Haltegitter (52) und/oder wenigstens eine Halteplatte (42) aufweist, in dem oder der die Durchgangsöffnung (31, 41) oder der Kanal (51) vorgesehen ist.

4. Halte- und/oder Fördersystem nach Anspruch 3, **dadurch gekennzeichnet, dass** der Haltering (32, 35) und/oder die Halteplatte (42) in einem Bereich um die Durchgangsöffnung (31, 41) oder den Kanal (51) wenigstens ein Durchlassloch (34) aufweist.

5. Halte- und/oder Fördersystem nach Anspruch 3 oder 4, **dadurch gekennzeichnet, dass** der Haltering (32, 35), die Halteplatte (42) oder das Haltegitter (52) innerhalb des Objektes (3a, 3b, 3c, 5) oder als ein Deckel des Objektes (4) vorgesehen ist und das Objekt (3a, 3b, 3c, 4, 5) die Verdickungsstelle (21a, 21b, 21c, 21d, 21e, 21f) umschließt.

6. Halte- und/oder Fördersystem nach wenigstens einem der vorhergehenden Ansprüche, **dadurch gekennzeichnet, dass** der Schlauch eine netzartige Struktur aufweist.

7. Halte- und/oder Fördersystem nach wenigstens einem der vorhergehenden Ansprüche, **dadurch gekennzeichnet, dass** der Schlauch gestrickt oder geflochten ist.

8. Halte- und/oder Fördersystem nach wenigstens einem der vorhergehenden Ansprüche, **dadurch gekennzeichnet, dass** das Objekt (3, 3a, 3b, 3c, 4, 5) in Form wenigstens eines Quaders (4), wenigstens eines Zylinders, wenigstens eines Kegelstumpfs (3, 3a, 3b, 3c) oder wenigstens einer Tragplatte (5) ausgebildet ist, wobei in der Kegelstumpfspitze (33) des Kegelstumpfs (3, 3a, 3b) eine Durchgangsöffnung (31) vorgesehen ist, durch die der Schlauch geführt ist und in dem Kegelstumpf (3, 3a, 3b) wenigstens ein mit der Kegelstumpfinnenwand (36) oder dem Kegelstumpfbodenrand (37) verbundener Haltering (32, 35) oder ein Haltegitter (52) vorgesehen ist, durch den oder das der Schlauch geführt ist, wobei die Verdickungsstelle (21a, 21b, 21c, 21d, 21e, 21f) zwischen dem Haltering (32, 35) und der Kegelstumpfspitze (33) vorgesehen ist.

9. Halte- und/oder Fördersystem nach wenigstens einem der vorhergehenden Ansprüche, **dadurch gekennzeichnet, dass** an dem Halte- und/oder Fördersystem wenigstens zwei Objekte (3, 3b) aufeinanderfolgend an dem Führungselement (2) aufgereiht sind, wobei wenigstens zwei dieser Objekte (3, 3b) ineinander gesteckt oder ineinander steckbar sind.

10. Halte- und/oder Fördersystem nach den Ansprüchen 8 und 10, **dadurch gekennzeichnet, dass** in dem Kegelstumpf (3a, 3b, 3c) wenigstens ein mit der Kegelstumpfinnenwand (36) oder dem Kegelstumpfbodenrand (37) verbundener Haltering (32, 35) oder ein mit der Kegelstumpfinnenwand (36) oder dem Kegelstumpfbodenrand (37) verbundenes Haltegitter (52) vorgesehen ist, der oder das eine Durchgangsöffnung (32a, 41) aufweist, durch die der Schlauch hindurchgeführt ist und in die eine Kegelstumpfspitze (33) eines weiteren Kegelstumpfs (3), durch die auch der Schlauch hindurchgeführt ist, eingesteckt ist.

11. Halte- und/oder Fördersystem nach wenigstens einem der vorhergehenden Ansprüche, **dadurch gekennzeichnet, dass** der Füllkörper (22b) wenigstens ein Stein oder ein Ball ist, dessen Außendurchmesser größer als der ungedehnte Innendurchmesser des Schlauches ist.

12. Halte- und/oder Fördersystem nach wenigstens einem der vorhergehenden Ansprüche, **dadurch gekennzeichnet, dass** das Objekt ein Rohrstutzen (7) mit wenigstens einem seitlich vorgesehenen Flanschanschluss (72) ist, wobei der Rohrstutzen (7) in dem Schlauch vorgesehen ist und darin eine Verdickungsstelle (21d) ausbildet und der Flanschanschluss (72) durch den Schlauch nach außen ragt, wobei der Flanschanschluss (72) in oder auf den Rohrstutzen (7) gesteckt oder geschraubt ist.

13. Halte- und/oder Fördersystem nach wenigstens einem der vorhergehenden Ansprüche, **dadurch gekennzeichnet, dass** wenigstens zwei Führungselemente (2) vorgesehen sind, die auf gleicher Höhe angeordnete Verdickungsstellen (21a, 21b, 21c, 21d, 21e, 21f) aufweisen, die eine Verbindungsbrücke halten, die eine Tragplatte (5) ausbildet, die sich zwischen den Führungselementen (2) erstreckt und die Verdickungsstellen (21a, 21b, 21c, 21d, 21e, 21f) umschließt.

14. Halte- und/oder Fördersystem nach wenigstens einem der vorhergehenden Ansprüche, **dadurch gekennzeichnet, dass** das wenigstens eine Führungselement (2) eine Fluidleitung bildet und
das Objekt (3) ein Fluidauffangbehälter ist.

15. Halte- und/oder Fördersystem nach Anspruch 14, **dadurch gekennzeichnet, dass** parallel zu dem wenigstens einen Führungselement (2) wenigstens ein Fluidleitelement (8) vorgesehen ist, das bis in den Fluidauffangbehälter verläuft, wobei das Fluidleitelement (8) an dem Führungselement (2) gehalten wird.

## Claims

1. Holding and/or conveying system comprising at least one holding device (1, 1a, 1b, 1c, 1d, 1e, 10, 10a) which extends in a linear or strip-like manner and has at least one object (3, 3a, 3b, 3c, 4, 5, 7) which forms a receiving container or a carrier element and is to be held and/or conveyed on the holding device (1, 1a, 1b, 1c, 1d, 1e, 10, 10a),
**characterized in that**
the holding and/or conveying system has at least one guide element (2) which extends in the longitudinal orientation (A) of the holding device (1, 1a, 1b, 1c, 1d, 1e, 10, 10a) and on and/or in which the at least one object (3, 3a, 3b, 3c, 4, 5, 7) is provided, the guide element (2) being a tube which has an expandable diameter and has at least one thickened point (21a, 21b, 21c, 21d, 21e, 21f) which forms a counter-holder for the object (3, 3a, 3b, 3c, 4, 5),
the object (3, 3a, 3b, 3c, 4, 5) having at least one through-opening (31, 41) or a channel (51) through which the guide element (2) is passed, the thickened point (21a, 21b, 21c, 21e, 21f) being arranged at the through-opening (31, 32a, 41) or in the channel (51), the thickened point (21a, 21b, 21c, 21e, 21f) being formed by at least one filling body (22b) provided in the tube and/or a quantity of filling material (22a) provided in the tube, the tube material being stretched at the thickened point (21a, 21b, 21c, 21d 21e, 21f) by the filling body (22b) and/or the filling material (22a) such that the outer diameter of the thickened point (21a, 21b, 21c, 21e, 21f) is greater than the inner diameter of the through-opening (31, 32a, 41, 51, 61), and the diameter of the tube material tapers on both sides of the thickened point (21a, 21b, 21c, 21e, 21f) and thus holds the filling body (22b) and/or the filling material (22a) at the thickened point (21a, 21b, 21c, 21e, 21f),
or the object (7) itself being provided at the thickened point (21d) in the tube and stretching the tube in such a way that the diameter of the tube material tapers on both sides of the thickened point (21d) and thus holds the object (7) at the thickened point (21d).

2. Holding and/or conveying system according to claim 1, **characterized in that** the through-opening (31, 41) or the channel (51) is provided centrally in the object (3, 3a, 3b, 3c, 4, 5).

3. Holding and/or conveying system according to either claim 1 or claim 2, **characterized in that** the object (3a, 3b, 3c, 4, 5) has at least one holding ring (32, 35), at least one holding grid (52) and/or at least one holding plate (42) in which the through-opening (31, 41) or the channel (51) is provided.

4. Holding and/or conveying system according to claim 3, **characterized in that** the holding ring (32, 35) and/or the holding plate (42) has at least one through-hole (34) in a region around the through-opening (31, 41) or the channel (51).

5. Holding and/or conveying system according to either claim 3 or claim 4, **characterized in that** the holding ring (32, 35), the holding plate (42) or the holding grid (52) is provided within the object (3a, 3b, 3c, 5) or as a cover of the object (4), and the object (3a, 3b, 3c, 4, 5) surrounds the thickened point (21a, 21b, 21c, 21d, 21e, 21f).

6. Holding and/or conveying system according to at least one of the preceding claims, **characterized in that** the tube has a mesh-like structure.

7. Holding and/or conveying system according to at least one of the preceding claims, **characterized in that** the tube is knitted or braided.

8. Holding and/or conveying system according to at least one of the preceding claims, **characterized in that** the object (3, 3a, 3b, 3c, 4, 5) is in the form of at least one cuboid (4), at least one cylinder, at least one truncated cone (3, 3a, 3b, 3c) or at least one carrier plate (5), a through-opening (31), through which the tube is guided, being provided in the truncated cone tip (33) of the truncated cone (3, 3a, 3b), and at least one holding ring (32, 35), which is connected to the truncated cone inner wall (36) or the truncated cone bottom edge (37), or a holding grid (52) being provided in the truncated cone (3, 3a, 3b), through which holding ring or holding grid the tube is guided, the thickened point (21a, 21b, 21c, 21d, 21e, 21f) being provided between the holding ring (32, 35) and the truncated cone tip (33).

9. Holding and/or conveying system according to at least one of the preceding claims, **characterized in that** at least two objects (3, 3b) are lined up successively on the guide element (2) on the holding and/or conveying system, it being possible for at least two of these objects (3, 3b) to be inserted into one another or insertable into one another.

10. Holding and/or conveying system according to claims 8 and 10, **characterized in that** at least one holding ring (32, 35) which is connected to the truncated cone inner wall (36) or the truncated cone bottom edge (37), or a holding grid (52) which is connected to the truncated cone inner wall (36) or the truncated cone bottom edge (37) is provided in the truncated cone (3a, 3b, 3c), which holding ring or holding grid has a through-opening (32a, 41) through which the tube is passed and into which a truncated cone tip (33) of a further truncated cone (3), through which the tube is also passed, is inserted.

11. Holding and/or conveying system according to at least one of the preceding claims, **characterized in that** the filling body (22b) is at least one stone or a ball, the outer diameter of which is greater than the unstretched inner diameter of the tube.

12. Holding and/or conveying system according to at least one of the preceding claims, **characterized in that** the object is a pipe connecting piece (7) having at least one laterally provided flange connection (72), the pipe connecting piece (7) being provided in the tube and forming a thickened point (21d) therein and the flange connection (72) protruding outward through the tube, the flange connection (72) being inserted or screwed into or onto the pipe socket (7).

13. Holding and/or conveying system according to at least one of the preceding claims, **characterized in that** at least two guide elements (2) are provided, which have thickened points (21a, 21b, 21c, 21d, 21e, 21f) which are arranged at the same height and hold a connecting bridge which forms a carrier plate (5) which extends between the guide elements (2) and surrounds the thickened points (21a, 21b, 21c, 21d, 21e, 21f).

14. Holding and/or conveying system according to at least one of the preceding claims, **characterized in that** the at least one guide element (2) forms a fluid line and the object (3) is a fluid collecting container.

15. Holding and/or conveying system according to claim 14, **characterized in that** at least one fluid conducting element (8) is provided parallel to the at least one guide element (2), which fluid conducting element extends into the fluid collecting container, the fluid conducting element (8) being held on the guide element (2).

## Revendications

1. Système de retenu et/ou de transport comportant au moins un dispositif de retenu (1, 1a, 1b, 1c, 1d, 1e, 10, 10a) s'étendant en forme de ligne ou en forme de bande et comportant au moins un objet (3, 3a, 3b, 3c, 4, 5, 7) formant un récipient ou un élément de support et devant être retenu ou transporté sur le dispositif de retenu (1, 1a, 1b, 1c, 1d, 1e, 10, 10a),
**caractérisé en ce**
**que** le système de retenu et/ou de transport présente au moins un élément de guidage (2) s'étendant dans la direction longitudinale (A) du dispositif de retenu (1, 1a, 1b, 1c, 1d, 1e, 10, 10a), sur et/ou dans lequel l'au moins un objet (3, 3a, 3b, 3c, 4, 5, 7) est prévu, l'élément de guidage (2) étant un tuyau à diamètre extensible, lequel présente au moins un point d'épaississement (21a, 21b, 21c, 21d, 21e, 21f) qui forme un contre-poids pour l'objet (3, 3a, 3b, 3c, 4, 5),
l'objet (3, 3a, 3b, 3c, 4, 5) présentant soit au moins une ouverture traversante (31, 41) ou un canal (51) à travers laquelle ou lequel l'élément de guidage (2) est guidé, le point d'épaississement (21a, 21b, 21c, 21e, 21f) étant disposé sur l'ouverture traversante (31, 32a, 41) ou dans le canal (51), le point d'épaississement (21a, 21b, 21c, 21e, 21f) étant formé par au moins un corps de remplissage (22b) prévu dans le tuyau et/ou par une quantité de matériau de remplissage (22a) prévue dans le tuyau, le matériau de tuyau étant dilaté au niveau du point d'épaississement (21a, 21b, 21c, 21d, 21e, 21f) par le corps de remplissage (22b) et/ou le matériau de remplissage (22a) de telle sorte que le diamètre extérieur du point d'épaississement (21a, 21b, 21c, 21e, 21f) est supérieur au diamètre intérieur de l'ouverture traversante (31, 32a, 41, 51, 61), et le diamètre du matériau de tuyau se rétrécit des deux côtés du point d'épaississement (21a, 21b, 21c, 21e, 21f) et retient ainsi le corps de remplissage (22b) et/ou le matériau de remplissage (22a) au niveau du point d'épaississement (21a, 21b, 21c, 21e, 21f),
soit l'objet (7) étant lui-même prévu au niveau du point d'épaississement (21d) dans le tuyau et dilatant le tuyau de telle sorte que le diamètre du matériau de tuyau se rétrécit des deux côtés du point d'épaississement (21d) et retient ainsi l'objet (7) au niveau du point d'épaississement (21d).

2. Système de retenu et/ou de transport selon la revendication 1, **caractérisé en ce que** l'ouverture traversante (31, 41) ou le canal (51) est prévu(e) centralement dans l'objet (3, 3a, 3b, 3c, 4, 5).

3. Système de retenu et/ou de transport selon la revendication 1 ou 2, **caractérisé en ce que** l'objet (3a, 3b, 3c, 4, 5) présente au moins un anneau de maintien (32, 35), au moins une grille de maintien (52) et/ou au moins une plaque de maintien (42), dans lesquel(le)s est prévu(e) l'ouverture traversante (31, 41) ou le canal (51).

4. Système de retenu et/ou de transport selon la revendication 3, **caractérisé en ce que** l'anneau de maintien (32, 35) et/ou la plaque de maintien (42) présentent au moins un trou traversant (34) dans une zone autour de l'ouverture traversante (31, 41) ou du canal (51).

5. Système de retenu et/ou de transport selon la revendication 3 ou 4, **caractérisé en ce que** l'anneau de maintien (32, 35), la plaque de maintien (42) ou la grille de maintien (52) est prévu(e) à l'intérieur de l'objet (3a, 3b, 3c, 5) ou en tant que couvercle de l'objet (4) et l'objet (3a, 3b, 3c, 4, 5) environne le point d'épaississement (21a, 21b, 21c, 21d, 21e, 21f).

6. Système de retenu et/ou de transport selon au moins l'une des revendications précédentes, **caractérisé en ce que** le tuyau présente une structure en réseau.

7. Système de retenu et/ou de transport selon au moins l'une des revendications précédentes, **caractérisé en ce que** le tuyau est tricoté ou tressé.

8. Système de retenu et/ou de transport selon au moins l'une des revendications précédentes, **caractérisé en ce que** l'objet (3, 3a, 3b, 3c, 4, 5) est conçu sous la forme d'au moins un parallélépipède (4), d'au moins un cylindre, d'au moins un tronc de cône (3, 3a, 3b, 3c) ou d'au moins une plaque de support (5), une ouverture traversante (31) étant prévue dans la pointe de tronc de cône (33) du tronc de cône (3, 3a, 3b), à travers laquelle le tuyau est guidé, et au moins un anneau de maintien (32, 35) ou une grille de maintien (52) relié(e) à la paroi interne de tronc de cône (36) ou au bord de fond de tronc de cône (37) étant prévu(e) dans le tronc de cône (3, 3a, 3b), à travers lequel ou laquelle le tuyau est guidé, le point d'épaississement (21a, 21b, 21c, 21d, 21e, 21f) étant prévu entre l'anneau de maintien (32, 35) et la pointe de tronc de cône (33).

9. Système de retenu et/ou de transport selon au moins l'une des revendications précédentes, **caractérisé en ce que**, sur le système de retenu et/ou de transport, au moins deux objets (3, 3b) sont alignés de façon consécutive sur l'élément de guidage (2), au moins deux de ces objets (3, 3b) étant insérés ou pouvant être insérés l'un dans l'autre.

10. Système de retenu et/ou de transport selon les revendications 8 et 10, **caractérisé en ce que**, dans le tronc de cône (3a, 3b, 3c), au moins un anneau de maintien (32, 35) relié à la paroi interne de tronc de cône (36) ou au bord de fond de tronc de cône (37), ou une grille de maintien (52) reliée à la paroi interne de tronc de cône (36) ou au bord de fond de tronc de cône (37) est prévu(e), lequel ou laquelle présente une ouverture traversante (32a, 41) à travers laquelle le tuyau est guidé et dans laquelle une pointe de tronc de cône (33) d'un autre tronc de cône (3), à travers laquelle le tuyau est également guidé, est insérée.

11. Système de retenu et/ou de transport selon au moins l'une des revendications précédentes, **caractérisé en ce que** le corps de remplissage (22b) est au moins un coulisseau ou une bille dont le diamètre extérieur est supérieur au diamètre intérieur non dilaté du tuyau.

12. Système de retenu et/ou de transport selon au moins l'une des revendications précédentes, **caractérisé en ce que** l'objet est un manchon tubulaire (7) comportant au moins un raccord de bride (72) prévu latéralement, le manchon tubulaire (7) étant prévu dans le tuyau et y formant un point d'épaississement (21d) et le raccord de bride (72) faisant saillie à travers le tuyau vers l'extérieur,
le raccord de bride (72) étant inséré ou vissé dans ou sur le manchon tubulaire (7).

13. Système de retenu et/ou de transport selon au moins l'une des revendications précédentes, **caractérisé en ce qu'**au moins deux éléments de guidage (2) sont prévus, lesquels présentent des points d'épaississement (21a, 21b, 21c, 21d, 21e, 21f) disposés à la même hauteur et maintenant un pont de liaison formant une plaque de support (5), laquelle plaque de support s'étend entre les éléments de guidage (2) et environne les points d'épaississement (21a, 21b, 21c, 21d, 21e, 21f).

14. Système de retenu et/ou de transport selon au moins l'une des revendications précédentes, **caractérisé en ce que** l'au moins un élément de guidage (2) forme une conduite de fluide et l'objet (3) est un récipient de collecte de fluide.

15. Système de retenu et/ou de transport selon la revendication 14, **caractérisé en ce que**, parallèlement à l'au moins un élément de guidage (2), au moins un élément de conduite de fluide (8) est prévu, lequel s'étend jusque dans le récipient de collecte de fluide, l'élément de conduite de fluide (8) étant retenu sur l'élément de guidage (2).
